# EUROPÄISCHE PATENTANMELDUNG

(11) **EP 4 579 165 A1**
(43) Veröffentlichungstag der Anmeldung: **02.07.2025**
(21) Anmeldenummer: 23220304.2
(22) Anmeldetag: 27.12.2023
(51) Int. Cl.: F27B 17/02, A61C 13/20, F27D 19/00, F27D 21/00, G01K 15/00

(54) **AUTOMATISCHE KALIBRIERUNG EINES DENTALOFENS**

(71) Anmelder: Ivoclar Vivadent AG, 9494 Schaan (LI)
(72) Erfinder: Beck, Gergor, 9494 Schaan (LI); Cetin, Tarkan, 6800 Feldkirch (AT); Jussel, Rudolf, 6800 Gisingen (AT)
(74) Vertreter: Baldus, Oliver

(57) **Zusammenfassung**

Dentalofen (100) zum Sintern von Dentalobjekten, mit einer Erfassungseinrichtung (103) zum Erfassen einer Abmessung eines gesinterten Referenzkörpers (105); und einer Parameterbestimmungseinrichtung (107) zum Bestimmen eines Prozessparameters für einen Sinterprozess auf Basis der erfassten Abmessung.

## Beschreibung

Die vorliegende Erfindung betrifft einen Dentalofen zum Sintern von Dentalobjekten und ein Verfahren zum Sintern von Dentalobjekten.

Gegenwärtig werden PTC-Ringe (Process Temperature Control Rings) zur Kalibration von Dentalöfen verwendet. Diese werden in der Brennkammer des Dentalofens mit vordefinierten Prozessparametern gesintert und erfahren während dieses Prozesses einen temperaturabhängigen Schwund, der sich in der Verringerung der räumlichen Form bemerkbar macht. Nach einem Brennvorgang innerhalb des Dentalofens kann der Durchmesser des PTC-Rings gemessen und mit einer entsprechenden Tabelle abgeglichen werden. Daraus kann ein genauerer Prozessparameter für den Sinterprozess innerhalb des Dentalofens ermittelt werden.

Dabei existieren jedoch mehrere Fehlerquellen, die zu einer fehlerbehafteten Kalibrierung führen können. Beispielsweise kann der PTC-Ring falsch im Dentalofen angeordnet sein oder der Durchmesser des gebrannten PTC-Rings kann durch den Benutzer an einer falschen Stelle gemessen werden. Die Vermessung mittels eines Messschiebers oder einer Mikrometerschraube kann durch den Benutzer fehlerhaft ausgeführt werden oder eine falsche Tabelle zum Ablesen des Prozessparameters verwendet werden. Dabei können Ablesefehler aus der Tabelle auftreten oder Fehler beim manuellen Übertragen der ermittelten Kalibrierwerte in den Dentalofen entstehen. Zudem ist dieser Prozess zeitaufwändig.

Es ist daher die technische Aufgabe der vorliegenden Erfindung, eine Kalibrierung eines Sinterprozesses in einem Dentalofen zu vereinfachen und zu beschleunigen.

Diese Aufgabe wird durch Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird die technische Aufgabe durch einen Dentalofen zum Sintern von Dentalobjekten gelöst, mit einer Erfassungseinrichtung zum Erfassen einer Abmessung eines gesinterten Referenzkörpers; und einer Parameterbestimmungseinrichtung zum Bestimmen eines Prozessparameters für einen Sinterprozess auf Basis der erfassten Abmessung. Die Erfassungseinrichtung und/oder Parameterbestimmungseinrichtung können direkt in den Dentalofen integriert sein oder auch als individuelle Einheiten drahtlos mit dem Dentalofen über eine Datenverbindung verbunden sein, wie beispielsweise über WLAN oder Bluetooth. Im Allgemeinen können durch die Erfassungseinrichtung auch mehrere Abmessungen des gesinterten Referenzkörpers erfasst werden. Auf dieser Basis kann dann eine Form oder ein Volumen des ungesinterten Referenzkörpers bestimmt werden. Der Prozessparameter kann einen unmittelbaren physikalischen Wert umfassen, mit dem der Sinterprozess durchgeführt wird, oder einen Korrekturwert für einen voreingestellten physikalischen Wert, mit dem der Sinterprozess durchgeführt wird.

Durch den Dentalofen wird der technische Vorteil erreicht, dass sich auf Basis der Abmessung des gesinterten Referenzkörpers Prozessparameter optimal und automatisch einstellen lassen. Einstellungsschritte werden automatisiert und mögliche Fehlerquellen werden beseitigt.

In einer technisch vorteilhaften Ausführungsform des Dentalofens umfasst die Erfassungseinrichtung eine Kamera oder eine Scaneinrichtung. Dadurch wird beispielsweise der technische Vorteil erreicht, dass sich die Abmessung des Referenzkörpers mit hoher Genauigkeit ermitteln lässt. Zudem können auch die räumliche Form oder das Volumen durch die Erfassungseinrichtung bestimmt werden.

In einer weiteren technisch vorteilhaften Ausführungsform des Dentalofens ist die Erfassungseinrichtung derart angeordnet, dass der Referenzkörper innerhalb des Dentalofens erfasst werden kann. Beispielsweise wird der Referenzkörper auf einer Ablagefläche innerhalb des Dentalofens erfasst. Dadurch wird beispielsweise der technische Vorteil erreicht, dass der gesinterte Referenzkörper nicht aus dem Dentalofen bewegt werden muss.

In einer weiteren technisch vorteilhaften Ausführungsform des Dentalofens ist die Erfassungseinrichtung ausgebildet, ein Volumen des Referenzkörpers oder eine Form des gesinterten und/oder ungesinterten Referenzkörpers zu bestimmen. Dadurch wird beispielsweise der technische Vorteil erreicht, dass sich Abweichungen vor und nach einem Sintern des Referenzkörpers mit noch höherer Genauigkeit bestimmen lassen.

In einer weiteren technisch vorteilhaften Ausführungsform des Dentalofens ist die Erfassungseinrichtung ausgebildet, einen Typ des Referenzkörpers zu erfassen. Das Erfassen des Typs kann beispielsweise auf Basis eines scanbaren Codes erfolgen, der auf dem Referenzkörper angeordnet ist. Dadurch wird beispielsweise der technische Vorteil erreicht, dass die Eigenschaften des Referenzkörpers ermittelt werden können.

In einer weiteren technisch vorteilhaften Ausführungsform des Dentalofens ist die Erfassungseinrichtung ausgebildet, die Abmessung des ungesinterten Referenzkörpers auf Basis des Typs zu ermitteln. Beispielsweise werden die Abmessungen des Referenzkörpers aus einer Tabelle oder Datenbank auf Basis des Typs abgerufen. Dadurch wird beispielsweise der technische Vorteil erreicht, dass auf eine vorherige Erfassung des ungesinterten Referenzkörpers verzichtet werden kann.

In einer weiteren technisch vorteilhaften Ausführungsform des Dentalofens ist die Erfassungseinrichtung ausgebildet, zu erkennen, ob der Referenzkörper in einem vorbestimmten Bereich angeordnet ist. Dadurch wird beispielsweise der technische Vorteil erreicht, dass eine korrekte Anordnung des Referenzkörpers überprüft wird und eine mögliche Fehlerquelle automatisch erkannt und beseitigt wird.

In einer weiteren technisch vorteilhaften Ausführungsform des Dentalofens ist die Parameterbestimmungseinrichtung ausgebildet, den Prozessparameter auf Basis einer Differenz zwischen der Abmessung des ungesinterten Referenzkörpers und der Abmessung des gesinterten Referenzkörpers zu bestimmen. Dadurch wird beispielsweise der technische Vorteil erreicht, dass sich die Genauigkeit der Bestimmung von Prozessparametern noch weiter verbessert.

In einer weiteren technisch vorteilhaften Ausführungsform des Dentalofens ist die Parameterbestimmungseinrichtung ausgebildet, einen Prozessparameter für eine Temperatur, einen Temperaturverlauf, eine Dauer des Sinterprozesses, einen Kalibrierwert für einen voreingestellten Prozessparameter, und/oder einen Luftdruckwert in der Brennkammer zu bestimmen. Dadurch wird beispielsweise der technische Vorteil erreicht, dass der Dentalofen besonders geeignete Prozessparameter einstellen oder kalibrieren kann.

In einer weiteren technisch vorteilhaften Ausführungsform des Dentalofens umfasst der Dentalofen eine Halterung für die Aufnahme und Vermessung des Referenzkörpers. Dadurch wird beispielsweise der technische Vorteil erreicht, dass der Referenzkörper an einer vorgesehenen Stelle mit hoher Genauigkeit erfasst werden kann.

Gemäß einem zweiten Aspekt wird die technische Aufgabe durch ein Verfahren zum Sintern von Dentalobjekten gelöst, mit den Schritten eines Erfassens einer Abmessung eines gesinterten Referenzkörpers durch eine Erfassungseinrichtung; und eines Bestimmens eines Prozessparameters für einen Sinterprozess auf Basis der erfassten Abmessung. Durch das Verfahren werden die gleichen technischen Vorteile wie durch den Dentalofen nach dem ersten Aspekt erreicht. Das Verfahren kann zum Kalibrieren des Dentalofens durchgeführt werden. In diesem Fall umfasst der Prozessparameter einen Korrekturwert für einen vorherigen Prozessparameter für den Sinterprozess, der an dem Referenzkörper durchgeführt worden ist. Der Korrekturwert wird zur Korrektur des vorherigen Prozessparameters verwendet. Ist der Sinterprozess an dem Referenzkörper beispielsweise mit einer voreingestellten Temperatur durchgeführt worden, kann ein Korrekturwert als Prozessparameter bestimmt werden, mit dem die voreingestellte Temperatur angepasst wird. Alternativ kann aber auch ein korrigierter und angepasster Temperaturwert als Prozessparameter bestimmt werden.

In einer technisch vorteilhaften Ausführungsform des Verfahrens ist der Referenzkörper zylinderförmig, ringförmig oder quaderförmig. Dadurch wird beispielsweise der technische Vorteil erreicht, dass sich die Abmessung auf einfache Weise ermitteln lässt.

In einer weiteren technisch vorteilhaften Ausführungsform des Verfahrens wird die Abmessung des ungesinterten Referenzkörpers erfasst. Dadurch wird beispielsweise der technische Vorteil erreicht, dass sich eine Veränderung der Abmessung durch den Sinterprozess ermitteln lässt.

In einer weiteren technisch vorteilhaften Ausführungsform des Verfahrens wird der Prozessparameter auf Basis einer Differenz zwischen der Abmessung des ungesinterten Referenzkörpers und der Abmessung des gesinterten Referenzkörpers bestimmt. Dadurch wird beispielsweise der technische Vorteil erreicht, dass sich der Prozessparameter genauer ermitteln lässt.

In einer weiteren technisch vorteilhaften Ausführungsform des Verfahrens wird ein Volumen des Referenzkörpers oder eine Form des gesinterten und/oder ungesinterten Referenzkörpers durch die Erfassungseinrichtung erfasst. Dadurch wird beispielsweise der technische Vorteil erreicht, dass sich die Genauigkeit des Verfahrens noch weiter verbessert.

Ausführungsbeispiele der Erfindung sind in den Zeichnungen dargestellt und werden im Folgenden näher beschrieben.

Es zeigen:
- Fig. 1: eine schematische Ansicht eines Dentalofens mit einer Erfassungseinrichtung; und
- Fig. 2: ein Blockdiagramm eines Verfahrens zum Sintern von Dentalobjekten.

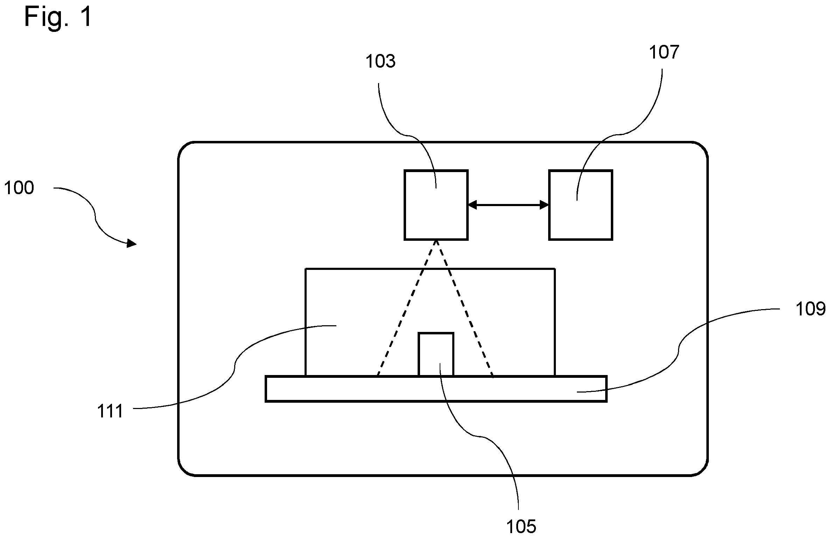

Fig. 1 zeigt eine schematische Ansicht eines Dentalofens 100 mit einer Erfassungseinrichtung 103. Der Dentalofen dient zur Herstellung von Dentalobjekten durch einen Sinterprozess, wie beispielsweise Kronen, Brücken oder anderer dentaler Restaurationen. Die Dentalobjekte werden in einer Brennkammer 111 des Dentalofens 100 über eine vorgegebene Zeit und Temperatur erhitzt, so dass hierbei der beabsichtigte Sinterprozess stattfinden kann. Hierzu kann der Luftdruck in der Brennkammer niedriger sein als in der Außenumgebung.

Beim Sintern werden feinkörnige keramische oder metallische Stoffe des verwendeten Sintermaterials erhitzt. Dabei liegt die Temperatur jedoch unterhalb der Schmelztemperatur der Hauptkomponenten, so dass die ursprüngliche räumliche Form des Dentalobjektes im Wesentlichen erhalten bleibt. Je nach den verwendeten Prozessparametern und Sintermaterialien findet dabei eine räumliche Schrumpfung der Dentalobjekte statt.

Zur Kalibrierung und Parameterbestimmung für einen Sinterprozess werden Referenzkörper 105 mit festgelegter Geometrie, Abmessungen und Eigenschaften verwendet, die ebenfalls aus Sintermaterialien gebildet sind. Diese Referenzkörper 105 sind beispielsweise ringförmig oder quaderförmig. Im Allgemeinen können die Referenzkörper 105 auch jede andere Geometrie aufweisen.

Mit diesem Referenzkörper 105 wird zunächst ein Sinterprozess mit vordefinierten Parametern innerhalb des Dentalofens 100 durchgeführt. Je nach Schrumpfung des Referenzkörpers 105 können die weiteren Prozessparameter angepasst werden. Ist beispielsweise die Schrumpfung des Referenzkörpers 105 zu groß, kann eine vorherige Temperatur des Sinterprozesses durch einen Korrekturwert verringert werden, der ebenfalls einen Prozessparameter bildet.

Zu diesem Zweck wird der Referenzkörper 105 nach dem Sinterprozess mit den vordefinierten Parametern automatisch durch die Erfassungseinrichtung 103 vermessen, beispielsweise optisch mit einer Kamera oder einem Intraoralscanner. Hierbei können eine oder mehrere Abmessungen des gesinterten Referenzkörpers 105 automatisch erfasst werden. Der Referenzkörper 105 kann hierzu nach einer Abkühlphase innerhalb des Dentalofens 100 erfasst werden, wie beispielsweise auf einer Ablageplatte im Inneren der Brennkammer 111. Der Referenzkörper 105 kann aber auch nach dem Sinterprozess in einer geeigneten Halterung 109 angeordnet werden, in der die Erfassungseinrichtung 103 den Referenzkörper 105 erfassen kann.

Bei der automatischen Erfassung und Vermessung werden manuelle Fehler ausgeschlossen. Durch die Erfassungseinrichtung 103 können die Form, das Volumen oder ein oder mehrere Abmessungen des Referenzkörpers 105 bestimmt werden. Die Abmessungen können beispielsweise durch einen Innen- oder Außendurchmesser eines ringförmigen Referenzkörpers 105 oder die Kantenlänge eines quaderförmigen Referenzkörpers 105 gegeben sein.

Die Erfassungseinrichtung 103 kann die Abmessung, das Volumen des Referenzkörpers 105 oder die Form des gesinterten und/oder ungesinterten Referenzkörpers 105 bestimmen. Die Erfassungseinrichtung 103 ist somit in der Lage, den Referenzkörper 105 vor und/oder nach dem Sinterprozess zu erfassen, so dass Veränderungen durch den Sinterprozess ermittelt werden können. Die Erfassungseinrichtung 103 ist beispielsweise ausgebildet, zu erkennen, ob der Referenzkörper 105 in einem vorbestimmten Bereich angeordnet ist, wie beispielsweise in einem vorgesehenen Bereich auf der Ablagefläche im Inneren des Dentalofens 100. Hierzu können entsprechende Bilderkennungsalgorithmen verwendet werden.

Im Allgemeinen kann die Erfassungseinrichtung 103 jede Einrichtung sein, mit der die zwei- oder dreidimensionale Form, das Volumen oder ein oder mehrere Abmessungen des Referenzkörpers 105 bestimmt werden können. Beispielsweise kann die Erfassungseinrichtung 103 eine Kamera mit oder ohne Größenreferenz, eine stereoskopische Kamera, einen Lidarscanner, ein taktiles Messsystem, ein Lichtmesssystem mit projizierten Mustern oder erfassten Schatten, eine Interferenzmessung oder eine Kombination der genannten Verfahren umfassen.

Die Erfassungseinrichtung 103 kann zudem feststellen, wenn der Referenzkörper 105 im Dentalofen 100 beim Sintern an einer falschen Stelle angeordnet worden ist. In diesem Fall entsteht beispielsweise eine geometrische Verzerrung des Referenzkörpers 105, die durch eine Temperaturdifferenz entsteht. Der Dentalofen 100 kann zudem eine spezielle Halterung 109 für die Aufnahme und Vermessung des Referenzkörpers 105 aufweisen.

Die Erfassungseinrichtung 103 mit einer Kamera auf Basis von optischen Bildern kann beispielsweise den Referenzkörper 105 in dem erfassten digitalen Bild erkennen und anhand der eingenommenen Größe im Bild die Abmessungen oder das Volumen des Referenzkörpers 105 bestimmen. Zu diesem Zweck wertet eine Software der Erfassungseinrichtung 103 die Geometrie des Referenzkörpers 105 aus und vermisst diese automatisiert. Die Software ist beispielsweise durch eine geeignete Bilderkennungssoftware gebildet. Dabei kann die Geometrie nicht nur an einer Stelle (wie bei einer Zweipunktmessung), sondern umlaufend und vollständig bestimmt werden. Durch Bildanalyse kann die Software beispielsweise die Abmessungen, die Form oder das Volumen des Referenzkörpers im aufgenommenen Bild erfassen.

Die Software kann zudem auch eine Beschriftung oder einen Code, beispielsweise einen Barcode oder QR-Code, auf dem Referenzkörper 105 erfassen und entsprechende Parameter laden, wie beispielsweise eine Parametertabelle zur Ermittlung eines Kalibrierwertes. Hierbei wird beispielsweise der erfasste Code zum Abrufen der Daten des Referenzkörpers 105 aus einer bereitgestellten Datenbank verwendet. Auf Basis des Codes können auch die Abmessungen und die geometrische Form des Referenzkörpers ermittelt werden, beispielsweise indem diese in Abhängigkeit des Codes aus einer Datenbank abgerufen werden.

Der Dentalofen 100 umfasst eine Parameterbestimmungseinrichtung 107 zum Bestimmen des Prozessparameters für einen Sinterprozess auf Basis der erfassten Abmessung des Referenzkörpers 105, die ebenfalls durch die Software gebildet wird. Die Parameterbestimmungseinrichtung 107 ist beispielsweise ausgebildet, den Prozessparameter für den weiteren Sinterprozess auf Basis einer Differenz zwischen der Abmessung des ungesinterten Referenzkörpers 105 und der Abmessung des gesinterten Referenzkörpers 105 zu bestimmen. Die Parameterbestimmungseinrichtung 107 kann aber auch ausgebildet sein, den Prozessparameter für den weiteren Sinterprozess auf Basis eines Absolutwertes der ermittelten Abmessung des Referenzkörpers 105 zu bestimmen. Je nach Schrumpfung des Referenzkörpers 105 können daher Prozessparameter angepasst oder ausgewählt werden. Dadurch steigt die Qualität des Sinterprozesses und es werden bessere Ergebnisse erzielt.

Die Parameterbestimmungseinrichtung 107 bestimmt beispielsweise einen Prozessparameter für eine Temperatur, einen Temperaturverlauf, eine Dauer des Sinterprozesses, einen Luftdruckwert in der Brennkammer oder einen Kalibrierwert für einen voreingestellten Prozessparameter, d.h. der Prozessparameter kann auch durch einen Korrekturwert gebildet sein, der auf einen zuvor eingestellten Prozessparameter angewendet wird.

Zur Bestimmung des Prozessparameters verwendet die Parameterbestimmungseinrichtung 107 den digitalen Absolutwert für die Abmessung und ruft aus einer entsprechend gespeicherten Tabelle oder Datenbank einen entsprechenden Wert für den jeweiligen Prozessparameter oder einen Korrekturwert ab. Hierzu kann in entsprechender Weise auch ein Relativwert verwendet werden, der die Änderung der Abmessung des Referenzkörpers 105 durch den Sinterprozess angibt. Hierzu können auch Absolut- oder Relativwerte verwendet werden, die die räumliche Form oder das Volumen des Referenzkörpers 105 angeben.

Die Parameterbestimmungseinrichtung 107 kann auch einen selbstlernenden oder angelernten Algorithmus umfassen, der als Eingabe den digitalen Relativ- oder Absolutwert für die Abmessung des Referenzkörpers 105 verwendet und als Ausgabe denjenigen Prozessparameter liefert, der der Abmessung zugeordnet ist. Hierzu kann beispielsweise ein künstliches neuronales Netz verwendet werden, das zuvor mit entsprechenden Trainingsdaten für diesen Zweck angelernt worden ist.

In Allgemeinen kann die Parameterbestimmungseinrichtung 107 durch jede Einrichtung gebildet sein, mit der es möglich ist, zu der erfassten Abmessung des Referenzkörpers automatisch den jeweiligen Prozessparameter zu finden.

Die Software übergibt den ermittelten Prozessparameter automatisch an den Dentalofen 100. Der Prozessparameter kann von der Software angezeigt werden, sodass der Benutzer diesen am Dentalofen 100 eintragen oder überprüfen kann. Die Erfassungseinrichtung 103 kann auch mit dem Dentalofen 100 verbunden sein, beispielsweise intern oder über ein Netzwerk, sodass der ermittelte Prozessparameter automatisch an den Dentalofen 100 übertragen werden kann. Für den weiteren Sinterprozess wird dann der ermittelte Prozessparameter verwendet.

Die Software kann durch einen Computer ausgeführt werden, mit dem die Erfassungseinrichtung 103, die Parameterbestimmungseinrichtung 107 und/oder der Dentalofen 100 angesteuert werden. Die Software kann aber auch durch ein Steuergerät ausgeführt werden, das im Dentalofen integriert ist. Die Software wird durch einen geeigneten Prozessor ausgeführt, der auf einen digitalen Speicher Zugriff hat. In dem digitalen Speicher sind die Software und zugehörige Daten abgelegt. Die Software und die Erfassungseinrichtung 103 können im selben Netzwerk oder über das Internet miteinander verbunden sein.

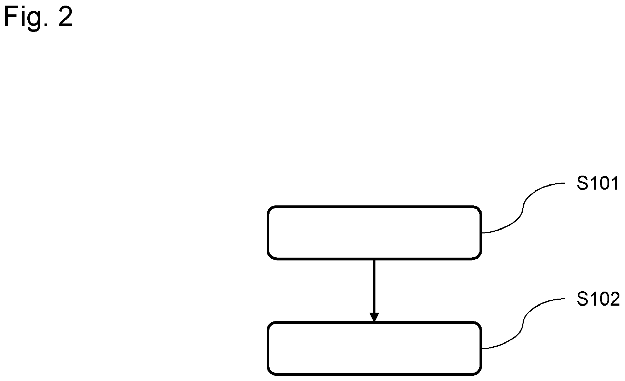

Fig. 2 zeigt ein Blockdiagramm eines Verfahrens zum Sintern von Dentalobjekten 100. Im Schritt S101 wird die räumliche Form des gesinterten Referenzkörpers 105 durch die Erfassungseinrichtung 103 erfasst. Dabei können lediglich einzelne Abmessungen des Referenzkörpers 105 bestimmt werden oder ein gesamter dreidimensionaler, räumlicher Bereich des Referenzkörpers.

In Schritt S102 werden anschließend die Parameter für einen Sinterprozess auf Basis der räumlichen Form bestimmt. Dabei kann eine Abweichung des Referenzkörpers auf Basis einer Form des Referenzkörpers 105 vor dem Sinterprozess und einer Form des Referenzkörpers 105 nach dem Sinterprozess bestimmt werden.

Die Form vor dem Sinterprozess kann beispielsweise ebenfalls durch die Erfassungseinrichtung 103 bestimmt werden oder auf Basis eines Typs des Referenzkörpers aus einer Tabelle abgerufen werden. Wird der Referenzkörper 105 vor dem Sinterprozess vermessen, kann eine vorliegende Abweichung der Geometrie des Referenzkörpers im ungesinterten Zustand festgestellt werden.

Anschließend wird das Dentalobjekt mit den neu ermittelten Prozessparametern für den Sinterprozess hergestellt. Durch das Verfahren werden viele Prozessschritte automatisiert und Fehlerquellen des Sinterprozesses eliminiert. Das Verfahren ist in kurzer Zeit durchzuführen und erhöht die Qualität einer Kalibrierung. Beispielsweise kann eine Vermessung des Referenzkörpers 105 und ein Abgleich mit Kalibrierwerttabellen automatisiert vorgenommen werden. Zudem kann durch die Automatisierung auch eine automatische Dokumentierung eines durchgeführten Kalibrierungsprozesses erfolgen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Einrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHEN

- 100: Dentalofen
- 103: Erfassungseinrichtung
- 105: Referenzkörper
- 107: Parameterbestimmungseinrichtung
- 109: Halterung
- 111: Brennkammer

## Patentansprüche

1. Dentalofen (100) zum Sintern von Dentalobjekten, mit:
- einer Erfassungseinrichtung (103) zum Erfassen einer Abmessung eines gesinterten Referenzkörpers (105); und
- einer Parameterbestimmungseinrichtung (107) zum Bestimmen eines Prozessparameters für einen Sinterprozess auf Basis der erfassten Abmessung.

2. Dentalofen (100) nach Anspruch 1, wobei die Erfassungseinrichtung (103) eine Kamera oder eine Scaneinrichtung umfasst.

3. Dentalofen (100) nach einem der vorangehenden Ansprüche, wobei die Erfassungseinrichtung (103) derart angeordnet ist, dass der Referenzkörper (105) innerhalb des Dentalofens (100) erfasst werden kann.

4. Dentalofen (100) nach einem der vorangehenden Ansprüche, wobei die Erfassungseinrichtung (103) ausgebildet ist, ein Volumen des Referenzkörpers (105) oder eine Form des gesinterten und/oder ungesinterten Referenzkörpers (105) zu bestimmen.

5. Dentalofen (100) nach einem der vorangehenden Ansprüche, wobei die Erfassungseinrichtung (103) ausgebildet ist, einen Typ des Referenzkörpers (105) zu erfassen.

6. Dentalofen (100) nach einem der vorangehenden Ansprüche, wobei die Erfassungseinrichtung (103) ausgebildet ist, die Abmessung des ungesinterten Referenzkörpers (105) auf Basis des Typs zu ermitteln.

7. Dentalofen (100) nach einem der vorangehenden Ansprüche, wobei die Erfassungseinrichtung (103) ausgebildet ist, zu erkennen, ob der Referenzkörper (105) in einem vorbestimmten Bereich angeordnet ist.

8. Dentalofen (100) nach einem der vorangehenden Ansprüche, wobei die Parameterbestimmungseinrichtung (107) ausgebildet ist, den Prozessparameter auf Basis einer Differenz zwischen der Abmessung des ungesinterten Referenzkörpers (105) und der Abmessung des gesinterten Referenzkörpers (105) zu bestimmen.

9. Dentalofen (100) nach einem der vorangehenden Ansprüche, wobei die Parameterbestimmungseinrichtung (107) ausgebildet ist, einen Prozessparameter für eine Temperatur, einen Temperaturverlauf, eine Dauer des Sinterprozesses, einen Kalibrierwert für einen voreingestellten Prozessparameter, und/oder einen Luftdruckwert in der Brennkammer (111) zu bestimmen.

10. Dentalofen (100) nach einem der vorangehenden Ansprüche, wobei der Dentalofen eine Halterung (109) für die Aufnahme und Vermessung des Referenzkörpers (105) umfasst.

11. Verfahren zum Sintern von Dentalobjekten, mit den Schritten:
- Erfassen (S101) einer Abmessung eines gesinterten Referenzkörpers (105) durch eine Erfassungseinrichtung (103); und
- Bestimmen (S102) eines Prozessparameters für einen Sinterprozess auf Basis der erfassten Abmessung.

12. Verfahren nach Anspruch 11, wobei der Referenzkörper (105) zylinderförmig, ringförmig oder quaderförmig ist.

13. Verfahren nach Anspruch 11 oder 12, wobei die Abmessung des ungesinterten Referenzkörpers (105) erfasst wird.

14. Verfahren nach einem der Ansprüche 11 bis 13, wobei der Prozessparameter auf Basis einer Differenz zwischen der Abmessung des ungesinterten Referenzkörpers (105) und der Abmessung des gesinterten Referenzkörpers (105) bestimmt wird.

15. Verfahren nach einem der Ansprüche 11 bis 14, wobei ein Volumen des Referenzkörpers (105) oder eine Form des gesinterten und/oder ungesinterten Referenzkörpers (105) durch die Erfassungseinrichtung (103) erfasst wird.
